# EUROPÄISCHE PATENTSCHRIFT

(11) **EP 0 489 882 B1**
(45) Veröffentlichungstag und Bekanntmachung des Hinweises auf die Patenterteilung: **14.09.1994**
(21) Anmeldenummer: 91911848.9
(22) Anmeldetag: 03.07.1991
(51) Int. Cl.: H02K 15/12, H02K 3/32

(54) **VERFAHREN ZUR HERSTELLUNG DER ELEKTRISCHEN ISOLIERUNG DER WICKLUNG EINER ELEKTRISCHEN MASCHINE**
PROCESS FOR PRODUCING THE ELECTRIC INSULATION OF ELECTRIC MACHINE WINDINGS
PROCEDE DE FABRICATION DE L'ISOLATION ELECTRIQUE DU BOBINAGE D'UNE MACHINE ELECTRIQUE

(30) Priorität: 03.07.1990 CS 3326/90; 27.09.1990 WO PCT/AT90/00095; 06.02.1991 WO PCT/AT91/00021
(43) Veröffentlichungstag der Anmeldung: 17.06.1992
(73) Patentinhaber: ISOVOLTA Österreichische Isolierstoffwerke Aktiengesellschaft, 2355 Wiener Neudorf (AT); CKD TRAKCE A.S., 190 02 Praha 9 (CS)
(72) Erfinder: SCHORM, Josef, 181 00 Praha 8 (CS); ZYCH, Otakar, 150 00 Praha 5 (CS); DEUTSCHMANN, Gottfried, A-8451 Heinmschuh (AT)
(74) Vertreter: Stampfer, Heinz
(86) Internationale Anmeldenummer: AT9100083
(87) Internationale Veröffentlichungsnummer: WO9201328

(56) Entgegenhaltungen:
- EP-A- 0 077 665
- EP-A- 0 173 382
- DE-A- 3 319 373
- GB-A- 378 173
- GB-A- 1 504 106
- PATENT ABSTRACTS OF JAPAN, Band 11, Nr. 17 (E-471)(2464) 17. Januar 1987; JP-A- 61189153 (HITACHI LTD) 22. August 1986
- PATENT ABSTRACTS OF JAPAN, Nr. C-684, 20. Februar 1990, & JP-A- 1282376 (OSAKA GAS CO.) 14. NOVEMBER 1989

## Beschreibung

### Technisches Gebiet

Die Erfindung betrifft ein Verfahren zur Herstellung der elektrischen Isolierung der Wicklung einer elektrischen Maschine, die mit Spiel in Nuten des Rotors oder Stators eingelegte Wicklungsabschnitte, insbesondere Teilleiterbündel aufweist.

### Stand der Technik

Die Qualität der elektrischen Isolierungen der Wicklungen von elektrischen Maschinen, d.h. Motoren und Generatoren, kann durch das Auftreten von Luftspalten zwischen den einzelnen Schichten der Isolation, insbesondere aber von Luftspalten zwischen der äußersten Isolationsschicht der Wicklung und den Innenwänden der im Blechpaket des Rotors oder Stators der Maschinen vorgesehenen Nuten, in welche die Wicklung aufgenommen ist, nicht unwesentlich verschlechtert werden. Solche Luftspalten beeinträchtigen nämlich den Abfluß der beim Betrieb in der Wicklung entstehenden Joule'schen Wärme in das Blechpaket.

Lufteinschlüsse und Luftspalten innerhalb der Isolierung selbst können durch die üblichen bekannten Technologien weitgehend vermieden werden. So sollen gemäß der Lehre der GB-A-378 173 derartige Luftspalte dadurch vermieden werden, daß der isolierte Leiter gegen die Nutwände gepreßt wird. Dies wird einerseits durch die Nutform, welche von der Nutmündung zum Nutboden hin verengend ausgestaltet ist, und andererseits durch Keile, welche die isolierten Leiter gegen die Nutwände pressen, gewährleistet. Dies gilt aber nur im beschränkten Ausmaß für die Vermeidung von Luftspalten zwischen der äußersten Schicht der Isolation und den Nuten-Innenwänden. Aus fertigungstechnischen Gründen ist es nun meist nicht möglich, die beiden Seitenwände der Nuten im Blechpaket jeweils völlig eben und planparallel herzustellen. Selbst wenn ein in die Nut einzubringendes Teilleiterbündel einen völlig exakt prismatischen Querschnitt hätte, könnte das Einbringen in die Nut nur mit einem mehr oder weniger großen Spiel zwischen der Oberfläche des isolierten Teilleiterbündels und den beiden Nut-Seitenwänden erfolgen.

Gemäß dem sogenannten "resin rich"-Verfahren zur Herstellung der Isolierung der Wicklungen von elektrischen Maschinen ist es bekannt, die Isolation aus Isoliermaterialien aufzubauen, die einen so hohen Anteil an Bindemitteln in Form von duromerem Kunstharz aufweisen, daß aufgrund des bei der Herstellung verfließenden Kunstharzes Lufteinschlüsse vermieden werden können. Dabei wird nach dem Aufbringen der Isoliermaterialien die Wicklung in einer aufwendigen Vorrichtung wärmebehandelt und in einem Preßvorgang unter Aushärtung der in der Isolation enthaltenen Kunstharze auf sehr exakte Abmessungen gebracht, wodurch ein relativ geringes Spiel zwischen der Wicklung und den Nut-Innenwänden erreicht werden kann.

Nach einem anderen, dem sogenannten Vakuumdruckimprägnierverfahren wird die Isolation der Wicklung zumindest zu einem großen Teil aus saugfähigen, porösen Isoliermaterialien aufgebaut. Nach Einbringen der Wicklung in die Nuten ergibt sich hier allerdings zunächst ein größeres Spiel zwischen Wicklung und Nut-Innenwänden. Der mit der Wicklung versehene Rotor oder Stator wird dann in einem Kessel mit einem duromeren Tränkharz imprägniert. Dabei wird in einem ersten Schritt der Rotor oder Stator im Imprägnierkessel einem Vakuum ausgesetzt, wodurch die Luft aus den Poren bzw. Spalten entfernt wird, wonach er in das Tränkharzbad eingebracht wird. Durch die anschließende Erzeugung eines Überdruckes im Imprägnierkessel wird das Eindringen des Tränkharzes in die Poren und Spalten erleichtert. Bei einer anschließenden Wärmebehandlung bei erhöhter Temperatur werden das im Rotor bzw. Stator aufgenommene Tränkharz sowie die sich in der Isolierung befindlichen Bindemittel und Kunstharze ausgehärtet.

Die Erfahrung zeigt aber, daß auch bei den üblichen Vakuumdruck-Imprägnierverfahren das Auftreten von Luftspalten zwischen der Teilleiterisolation und den Nut-Innenwänden nicht sicher vermieden werden kann.

Um dem abzuhelfen, wurde in der älteren internationalen Patentanmeldung PCT/AT91/00021 (veröffentlicht unter WO 91/12133) der Anmelder, welche zum Stand der Technik gemäß Art. 54(3) EPÜ zählt, vorgeschlagen, für die Herstellung der elektrischen Isolierung der Wicklung einer elektrischen Maschine nach dem Vakuumdruckimprägnierverfahren vor dem Einlegen der Wicklung in die Nuten des Stators oder Rotors die Nuten durch ein Laminat auszukleiden, welches zumindest in einer Laminatschicht eine elastisch komprimierte Masse aus hochelastischen, elektrisch isolierenden Fasern und ein verfestigtes, in der Wärme jedoch noch erweichbares aushärtbares Kunstharz enthält, das die Fasermasse in ihrem komprimierten Zustand hält. Nach Einlegen der Wicklung und Verschließen der Nuten wird der Rotor oder Stator eine Vakuumdruckimprägnierung unterzogen und anschließend in einem Ofen ausgehärtet. Beim Imprägniervorgang dringt das heiße Tränkharz insbesondere auch in die Poren des elastisch expandierbaren Laminats ein. Dadurch wird das Kunstharz zum Schmelzen gebracht, wodurch sich die Fasermasse elastisch entspannt und dabei die anschließenden Zwischenräume in der Nut gleichmäßig ausfüllt und so Lufteinschlüsse in der Nut sicher vermieden werden.

### Darstellung der Erfindung

Der Erfindung liegt nun die Aufgabe zugrunde, das Verfahren zur Herstellung der Isolierung der Wicklung einer elektrischen Maschine, wie sie in der genannten internationalen Patentanmeldung beschrieben ist, so abzuändern, daß eine bessere mechanische Fixierung der Wicklungen in den Nuten erreicht werden kann.

Die der Erfindung zugrundeliegende Aufgabe wird in dem erfindungsgemäßen Verfahren dadurch gelöst, daß Nuten vorgesehen werden, deren Querschnitt sich zumindest über einen Bereich der Nuttiefenerstreckung in radialer Richtung auf die Nutmündung zu verengt und daß - zumindest in diesem Bereich - in den sich zwischen der Nutoberfläche und den Wicklungsabschnitten bzw. Teilleiterbündeln ausbildenden spaltförmigen Zwischenraum ein in der Wärme expandierbares Laminat eingebracht wird, welches eine elastisch komprimierbare Masse aus hochelastischen Fasern enthält sowie ein verfestigtes, in der Wärme jedoch noch erweichbares aushärtbares Kunstharz, das die Fasermasse in ihren komprimierten Zustand hält, und daß das Laminat danach zur Erweichung des Kunstharzes erwärmt wird, wonach das Laminat durch Entspannung der komprimierten Fasermasse expandiert und den genannten spaltförmigen Zwischenraum ausfüllt, derart, daß in dem genannten Bereich des sich verengenden Nutquerschnitts die elastisch expandierte sich an der Nutoberfläche abstützende Fasermasse infolge einer restlichen mechanischen Komprimierung zumindest auf einen eingelegten Wicklungsabschnitt bzw. ein Teilleiterbündel eine Kraft mit einer nicht unwesentlichen Komponente in Richtung auf den Nutboden ausübt, und daß das Kunstharz danach bei erhöhter Temperatur ausgehärtet wird. Dabei erfolgt das Erwärmen des Kunstharzes vorteilhaft durch Tränken des Laminats mit einem heißen, flüssigen, duromeren Kunststoff als Tränkmedium, welches die Poren des expandierten Laminats ausfüllt.

Nach vortelhaften Ausgestaltungen des erfindungsgemäßen Verfahrens wird vor der Expansion der Fasermasse des eingebrachten Laminats die Nutmündung durch ein temporäres oder bleibendes Abstützorgan verschlossen. Dabei kann zum temporären Verschließen der Nutmündungen eines Rotors als Abstützorgan eine an der Rotoroberfläche aufgebrachte, abnehmbare Bewicklung aus einem Temperaturkontraktionsband aufgebracht werden bzw. es. kann zum temporären Verschließen der Nutmündungen eines Stators als Abstützorgan, vorteilhaft eine abnehmbare, teilbare zylindrische Schablone dienen. Gemäß vorteilhaften Varianten des erfindungsgemäßen Verfahrens können als bleibende Abstützorgane zum Verschließen der Nutmündungen auch Verschlußkeile oder - leisten vorgesehen werden, die seitlich in Befestigungsnuten, welche in den Nutseitenwänden angebracht sind, gehalten werden.

Gemäß einer weiter vorteilhaften Ausgestaltung des erfindungsgemäßen Verfahrens ist der Bereich, in dem sich der Nutquerschnitt zur Nutmündung zu verengt, an bzw. in der Nähe der Nutmündung gelegen, wobei seine Tiefe weniger als die Hälfte der Nuttiefe beträgt und die der Nutmündung zugewandte Oberkante des in die Nut eingebrachten, der Nutmündung am nächsten liegenden Wicklungsabschnitts bzw. Teilleiterbündels sich innerhalb dieses Bereiches befindet.

In weiteren vorteilhaften Ausgestaltungen des erfindungsgemäßen Verfahrens weist das eingesetzte Laminat an einer oder beiden Seiten an die elastisch expandierbare Schicht anschließend jeweils eine Folie aus elektrisch isolierendem Material auf, wobei das Laminat mit der Folienseite zur Nutwand in den spaltförmigen Zwischenraum eingelegt wird oder es weist das eingesetzte Laminat zu beiden Seiten eine Folie aus elektrisch isolierendem Material auf. Dabei kann im eingesetzten Laminat zumindest eine der Folien vorteilhaft aus Polyester oder Polyimid bestehen, während in ihrer elastisch expandierbaren Schicht die Fasermasse vorteilhaft aus Glasfasern, Aramidfasern oder Polyesterfasern besteht.

Nach einer anderen vorteilhaften Ausgestaltung der Erfindung ist in der elastisch expandierbaren Schicht des eingesetzten Laminats die Fasermasse auf Basis von Faservliesen, Fasermatten oder Faserfilzen hergestellt.

Gemäß einer letzten vorteilhaften Ausgestaltung des erfindungsgemäßen Verfahrens weist die elastisch expandierbare Schicht des eingesetzten Laminats einen Kunstharzanteil von 10 bis 40 - Gew.%, vorteilhaft aber einen Kunstharzanteil von 10 bis 28 Gew.% auf.

### Einige Wege zur Ausführung der Erfindung mit der Erläuterung der Figuren

Bei der Durchführung des erfindungsgemäßen Verfahrens wird ein Laminat benötigt, das gemäß einem Verfahrensbeispiel auf folgende Weise hergestellt wird.

Ein Glasvliesband mit einem Flächengewicht von 60 g/m² und einer Dicke von 1,0 mm, das aus geschnittenen, nicht orientierten E-Glasspinnfäden hergestellt ist, wird mit einem Harz, das zu 98,4% aus einem Epoxydharz auf Basis eines Diglycidylethers des Bisphenols A und zu 1,6% aus Zinknaphtenat als latentem Beschleuniger besteht, imprägniert, so daß der Harzanteil im imprägnierten Glasvliesband aus 20 Gew.% besteht. Der Zusatz des Zinknaphtenats hat noch die für das weitere Verfahren vorteilhafte Wirkung, daß es den Schmelzbereich nach Kofler des eingsetzten Epoxydharzes, der um 120°C liegt, herabsetzt, so daß das Imprägnierharz selbst einen Schmelzbereich um 70°C aufweist.

Die Imprägnierung erfolgt in einer Imprägnieranlage, in der das kontinuierlich zugeführte Glasfasermattenband mit einer Lösung des Imprägnierharzes in Methylethylketon als Lösungsmittel betropft und anschließend beim Durchlauf durch einen Trockenkanal das Lösungsmittel abgedampft wird. Das so imprägnierte Glasfaserband wird dann wie üblich in Stücke abgelängt und abgestapelt.

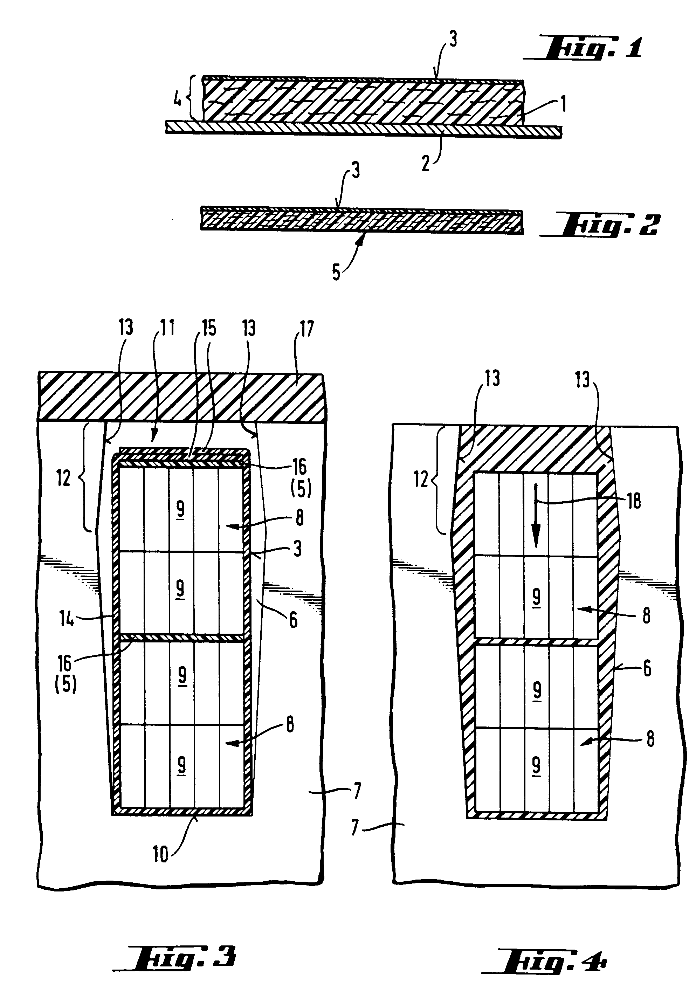

Zur Herstellung des Laminats wird nun, wie in Fig. 1 schematisch angedeutet, das imprägnierte Glasfasevlies 1 auf das Preßblech 2 aufgelegt und mit einer Polyesterfolie 3 (Polyethylenterephthalat) einer Dicke von 0,03 mm abgedeckt. Dieser Stapel 4, der eine Dicke von ca. 1,05 mm aufweist, wird dann auf dem Preßblech in eine Presse mit beheiz- und rückkühlbaren Preßplatten gebracht und durch Zufahren der Preßplatten gegen Abstandsleisten auf eine Dicke von 0,45 mm komprimiert. Die Preßplatten werden dann auf 120°C aufgeheizt und diese Temperatur während ca. 1 Stunde gehalten. Dabei wird das Preßgut vollständig durchwärmt und das Imprägnierharz wegen seines niedrigen Schmelzbereiches erweicht, wonach es verfließt und sich gleichmäßig über das Volumen der Faservliese verteilt. Anschließend werden die Preßplatten und damit das Preßgut auf etwa Raumtemperatur rückgekühlt, wodurch sich das Imprägnierharz wieder verfestigt und der komprimierte Stapel 4 in das fertige Laminat 5 - siehe Figur 2 - übergeführt, das man dann aus der Presse austrägt.

Die Herstellung der elektrischen Isolierung des Rotors einer elektrischen Maschine sowie ihre Fixierung in den Nuten sei nun anhand von Fig. 3 erläutert.

Fig. 3 zeigt den Schnitt durch eine Nut 6 im Rotorblechpaket 7 mit den zwei schematisch dargestellten Teilleiterbündeln 8. Jedes der Teilleiterbündel 8 besteht aus zehn Kupferleitern 9, wobei die Einzelleiterisolationen, die aus einem relativ bindemittelreichen Glimmer-Kunststoffolienverbund aufgebaut sein können und einer bindemittelarmen Teilleiterbündelisolation, z.B. auf Basis von Glimmer-Glasgeweben, die in der Figur nicht dargestellt sind.

Der Querschnitt der Nut 6 weist eine besondere Form auf: Beginnend am Nutboden 10 erweitert sich der Nutquerschnitt zunächst, wonach er sich innerhalb eines an der Nutmündung 11 anschließenden Bereiches 12 der Nuttiefenerstreckung wieder verengt. In diesem Bereich 12 sind die seitlichen ebenen Abschnitte 13 der Nutoberfläche um jeweils einem Winkel, der vorteilhaft zwischen 4 und 6° betragen kann, nach innen geneigt.

In die noch leeren Nuten 6 wird zunächst jeweils eine Hülse 14, die aus dem beschriebenen Laminat zugeschnitten und vorgefaltet ist und welche dieselbe Breite wie der Nutboden 10 hat, eingelegt, wobei die in Fig. 3 übereinanderliegend dargestellten Deckelbereiche 15 der Hülse 14 noch aufgefaltet sind. Das expandierbare Laminat 5 der Hülse 14 ist so angeordnet, daß seine Folienseite zur Nutwand zugekehrt ist. Danach wird die Wicklung in die Nuten 6 eingelegt, wobei zwischen den beiden Teilleiterbündeln 8 sowie über dem oberen Teilleiterbündel jeweis ein Streifen 16 aus dem expandierbaren Laminat 5 angeordnet wird. Anschließend werden die beiden Deckelbereiche 15 der Hülse 14 übereinander gefaltet und durch Verklebung fixiert. Nach dem wie vorstehend beschriebenen Einlegen der Wicklung in die Nuten wird auf die Rotoroberfläche eine Bewicklung 17 aus einem Temperaturkontraktionsband aufgebracht. Fig. 3 zeigt die Anordnung in dieser Phase des Verfahrens.

Danach wird der Rotor in üblicher Weise einer Vakuumdruckimprägnierung unterzogen und anschließend bei erhöhter Temperatur in einem Ofen ausgehärtet.

Beim Imprägniervorgang dringt das heiße und relativ dünnflüssige Tränkharz in alle freien Spalten und Poren innerhalb der Nut und der Wicklungsisolation ein, insbesondere auch in die Poren des expandierbaren Laminatmaterials der Hülse 14 und des Streifens 16. Dadurch wird das Kunstharz, welches die Fasermasse im komprimierten Zustand hält, zum Schmelzen gebracht, wodurch sich die Fasermasse elastisch entspannt, dabei die spaltförmigen Zwischenräume in der Nut bzw. den Hohlraum zwischen der Bewicklung 17, welche ein temporäres Abstützorgan bildet, und der Oberflächenseite des oberen Teilleiterbündels 8 ausfüllt. Nach der Aushärtung des Rotors im Ofen wird die Bewicklung 17 wieder entfernt und man erhält eine Konfiguration, wie sie in Fig. 4 schematisch dargestellt ist.

Im Bereich 12 des sich verengenden Nutquerschnittes übt die elastisch expandierte, sich an den Abschnitten 13 der Nutoberfläche abstützende, Fasermasse infolge einer restlichen mechanischen Komprimierung auf das obere der beiden eingelegten Teilleiterbündel 3 eine Kraft mit einer nicht unwesentlichen Komponente in Richtung des Pfeiles 18, d.h. auf den Nutboden 10 hin, aus. Das bewirkt, daß die beiden Teilleiterbündel 8 jeweils unter Vorspannung in der Nut 6 gehalten werden, was die Stabilität der Fixierung der Wicklung in den Nuten wesentlich erhöht.

Im Gegensatz zu den anhand der Figuren 3 und 4 beschriebenen Variante des erfindungsgemäßen Verfahrens, bei dem man mit einem temporären Abstützorgan in Form der Bewicklung 17 das Auslangen findet, werden bei den Verfahrensvariaten gemäß den Figuren 5 und 6 bzw. gemäß Fig. 7 bleibende Abstützorgane eingesetzt.

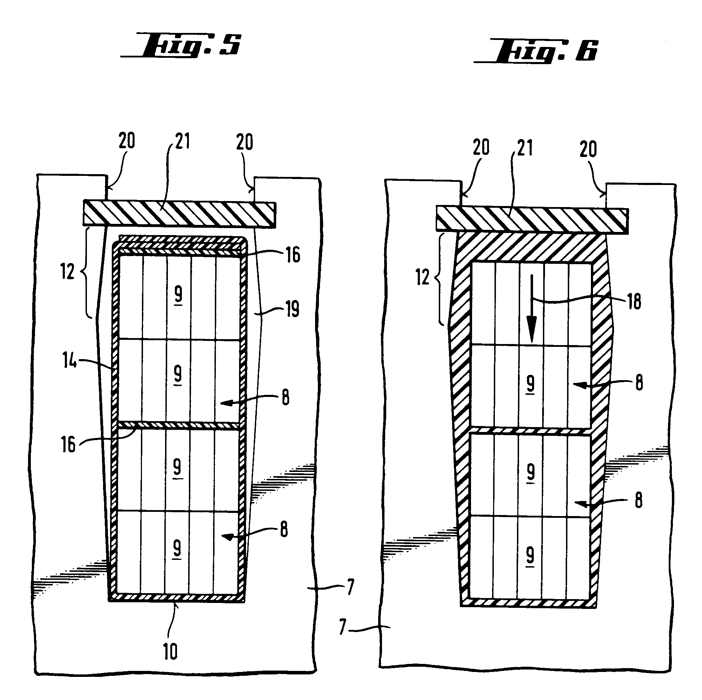

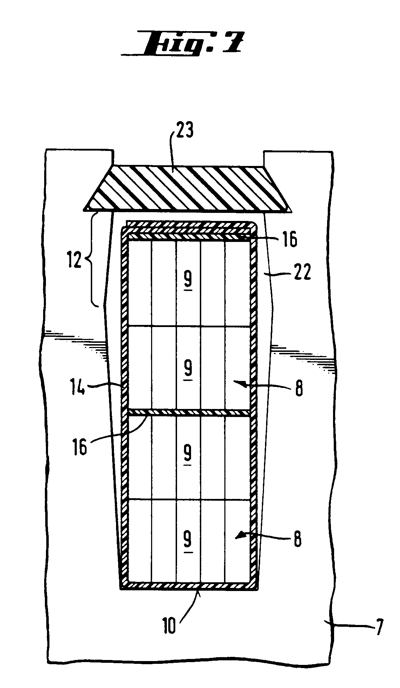

Fig. 5 zeigt eine Nut 19, deren Querschnitt ähnlich ausgebildet ist wie die Nut 6 gemäß Fig. 3, bei der jedoch der Bereich 12 sich verengenden Querschnitts nicht bis an die Nutmündung 11 reicht, sondern an ihn ein Bereich 20 mit planparallelen Nutseitenwänden anschließt, in die einander gegenüberliegende Befestigungsnuten angebracht sind, welche eine Verschlußleiste 21 halten. Im übrigen ist die Anordnung der beiden Teilleiterbündel 8 der Hülse 14 und der Laminatstreifen 16 identisch mit der in Fig. 3. dargestellten. Fig. 6 zeigt die Konfiguration der Anordnung gemäß Fig. 5 nach Expansion der elastisch komprimierten Fasermassen.

Fig. 7 stellt eine Nut 22 mit eingelegter Wicklung dar, die identisch mit der gemäß Fig. 5 ist, mit dem Unterschied, daß als Stützorgan statt einer Verschlußleiste ein Verschlußkeil 23 angebracht ist.

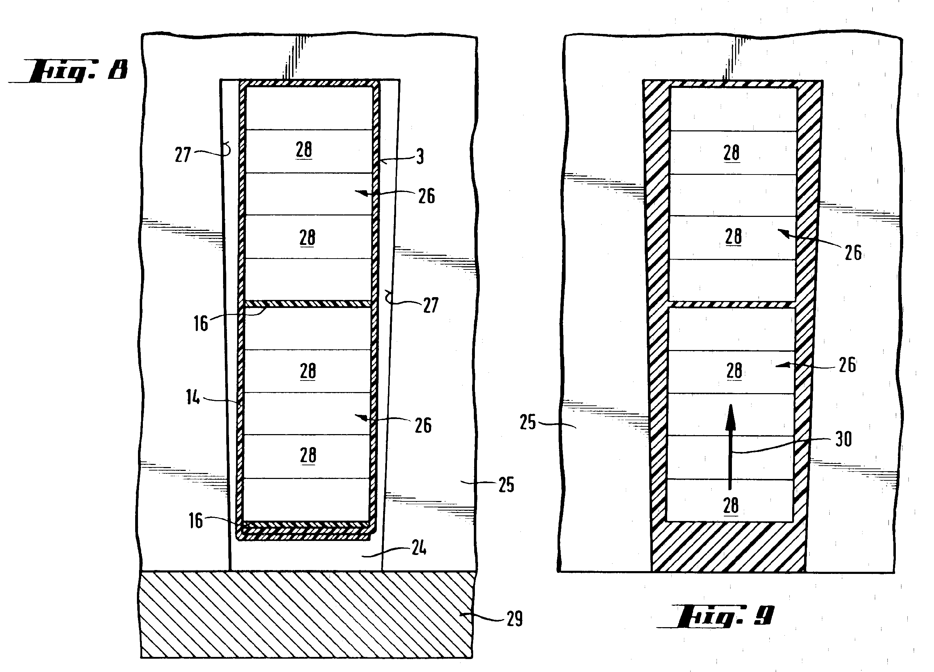

Die Figuren 8 und 9 illustrieren die Herstellung der elektrischen Isolierung des Stators einer elektrischen Maschine sowie ihre Fixierung in den Nuten 24.

In Fig. 8 wird im Schnitt eine Nut 24 im Statorblechpaket 25 mit zwei schematisch dargestellten Teilleiterbündeln 26 gezeigt. Die Nut 24 weist seitliche ebene Nutseitenflächen 27 auf, die um einen Winkel von jeweils 1.5° nach innen geneigt sind. Die beiden Teilleiterbündel 26 weisen jeweils fünf Leiter 28 auf. Die Anordnung der Hülse 14 und der Streifen 16 ist analog wie bei der Rotor-Variante gemäß den Fig. 3 und 4. Als temporäres Abstützorgan dient eine alle Nuten des Stators abdeckende, abnehmbare und teilbare Schablone, die in Fig. 8 mit 29 angedeutet ist. Durch die Expansion der elastisch komprimierten Fasermasse während der Vakuumdruckimprägnierung wird hauptsächlich auf das an der Nutmündung liegende Teilleiterbündel eine Kraft in Richtung des Pfeiles 30 ausgeübt (siehe Fig. 9). Nach dem Aushärten des Stators im Ofen wird die Schablone 29 entfernt und man erhält die Konfiguration, wie sie in Fig. 9 dargestellt ist.

Das Anordnen des Laminats im Spalt zwischen Nutenwand und Teilleiteroberfläche mit zur Nutenwand zugekehrter Folie hat den Vorteil, daß die Folie bei einer Demontage der Wicklung sozusagen als Trennfolie wirkt.

Das beim Verfahren zum Einsatz gelangende Laminat kann aus verschiedenen Schichtkombinationen bestehen. Bei einem Zweischichtaufbau, der aus einer Folie und der elastisch expandierbaren Schicht besteht, wird z.B. für Maschinen der Klasse F eine Polyesterfolie eingesetzt und für Maschinen der Klasse H z.B. eine Polyimidfolie oder eine Folienkombination, die eine Polyimidfolie enthält. Die elastisch expandierbare Schicht wird vorteilhaft aus Glasfaservlies, einer Glasfasermatte, einem Polyesterfilz oder einem Aramidfilz (Nomexfilz) hergestellt.

### Gewerbliche Anwendbarkeit

Das erfindungsgemäße Verfahren kann besonders vorteilhaft bei der Herstellung von Traktionsmotoren eingesetzt werden sowie bei allen Maschinen, bei denen die Nuten im Blechpaket des Rotors oder Stators eine Nutauskleidung aufweisen.

## Patentansprüche

1. Verfahren zur Herstellung der elektrischen Isolierung der Wicklung einer elektrischen Maschine, die mit Spiel in Nuten des Rotors oder Stators eingelegte Wicklungsabschnitte insbesondere Teilleiterbündel aufweist, bei welchem Nuten (6, 11,22,24) vorgesehen werden, deren Querschnitt sich zumindest über einen Bereich der Nuttiefenerstreckung in radialer Richtung auf die Nutmündung zu verengt und daß - zumindest in diesem Bereich - in den sich zwischen der Nutoberfläche und den Wicklungsabschnitten bzw. Teilleiterbündeln (8,26) ausbildenden spaltförmigen Zwischenraum ein in der Wärme expandierbares Laminat (5) eingebracht wird, welche eine elastisch komprimierbare Masse aus hochelastischen Fasern enthält sowie ein verfestigtes, in der Wärme jedoch noch erweichbares aushärtbares Kunstharz, das die Fasermasse in ihren komprimierten Zustand hält, und daß das Laminat (5) danach zur Erweichung des Kunstharzes erwärmt wird, wonach das Laminat durch Entspannung der komprimierten Fasermasse expandiert und den genannten spaltförmigen Zwischenraum ausfüllt, derart, daß in dem genannten Bereich des sich verengenden Nutquerschnitts die elastisch expandierte sich an der Nutoberfläche abstützende Fasermasse infolge einer restlichen mechanischen Komprimierung zumindest auf einen eingelegten Wicklungsabschnitt bzw. ein Teilleiterbündel (8,26) eine Kraft mit einer nicht unwesentlichen Komponente in Richtung auf den Nutboden (10) hin ausübt, und daß das Kunstharz danach bei erhöhter Temperatur ausgehärtet wird.

2. Verfahren nach Anspruch 1, dadurch gekennzeichnet, daß das Erwärmen des Kunstharzes durch Tränken des Laminats mit einem heißen, flüssigen, duromeren Kunststoff als Tränkmedium erfolgt, welches die Poren des expandierten Laminats (5) ausfüllt.

3. Verfahren nach Anspruch 1 oder 2, dadurch gekennzeichnet, daß vor der Expansion der Fasermasse des eingebrachten Laminats die Nutmündung durch ein temporäres oder bleibendes Abstützorgan verschlossen wird.

4. Verfahren nach Anspruch 3, dadurch gekennzeichnet, daß zum temporären Verschließen der Nutmündungen eines Rotors als Abstützorgan eine an der Rotoroberfläche aufgebrachte, abnehmbare Bewicklung (17) aus einem Temperaturkontraktionsband aufgebracht wird.

5. Verfahren nach Anspruch 2, dadurch gekennzeichnet, daß zum temporären Verschließen der Nutmündungen eines Stators als Abstützorgan eine abnehmbare, teilbare zylindrische Schablone (29) dient.

6. Verfahren nach Anspruch 2, dadurch gekennzeichnet, daß als bleibende Abstützorgane zum Verschließen der Nutmündungen Verschlußkeile cder -leisten (23, 21) vorgesehen sind, die seitlich in Befestigungsnuten, welche in den Nutseitenwänden angebracht sind, gehalten werden.

7. Verfahren nach einem der Ansprüche 1 - 6, dadurch gekennzeichnet, daß der Bereich (12) in dem sich der Nutquerschnitt zur Nut- mündung zu verengt bzw. in der Nähe der Nutmündung gelegen ist, daß seine Tiefe weniger als die Hälfte der Nuttiefe beträgt und daß die der Nutmündung zugewandte Oberkante des in die Nut eingebrachten, der Nutmündung (11) am nächsten liegenden Wicklungsabschnitts bzw. Teilleiterbündels (8) sich innerhalb dieses Bereiches (12) befindet.

8. Verfahren nach einem der Ansprüche 1 bis 7, dadurch gekennzeichnet, daß das eingesetzte (5) Laminat zumindest an einer Seite an die elastisch expandierbare Schicht anschließend eine Folie (3) aus elektrisch isolierendem Material aufweist.

9. Verfahren nach Anspruch 8, dadurch gekennzeichnet, daß das Laminat (5) mit der Folienseite zur Nutwand in den spaltförmigen Zwischenraum eingelegt wird.

10. Verfahren nach Anspruch 8 oder 9, dadurch gekennzeichnet, daß das eingesetzte Laminat an beiden Seiten an die elastisch expandierbare Schicht anschließend jeweils eine Folie aus elektrisch isolierendem Material aufweist.

11. Verfahren nach einem der Ansprüche 1 bis 8, dadurch gekennzeichnet, daß das eingesetzte Laminat (5) zu beiden Seiten einer Folie aus elektrisch isolierendem Material anschließend elastisch expandierbare Schichten aufweist.

12. Verfahren nach einem der Ansprüche 8 bis 11, dadurch gekennzeichnet, daß im eingesetzten Laminat zumindest eine der Folien aus Polyester besteht.

13. Verfahren nach einem der Ansprüche 8 bis 11, dadurch gekennzeichnet, daß im eingesetzten Laminat zumindest eine der Folien aus Polyimid besteht oder Polyimid in einem Folienverbund enthält.

14. Verfahren nach einem der Ansprüche 1 bis 13, dadurch gekennzeichnet, daß in der elastisch expandierbaren Schicht des eingesetzten Laminats die Fasermasse zumindest überwiegend aus Glasfasern besteht .

15. Verfahren nach einem der Ansprüche 1 bis 13, dadurch gekennzeichnet, daß in der elastisch expandierbaren Schicht des eingesetzten Laminats die Fasermasse zumindest überwiegend aus Aramidfasern besteht.

16. Verfahren nach einem der Ansprüche 1 bis 13, dadurch gekennzeichnet, daß in der elastisch expandierbaren Schicht des eingesetzten Laminats die Fasermasse zumindest überwiegend aus Polyesterfasern besteht.

17. Verfahren nach einem der Ansprüche 1 bis 16, dadurch gekennzeichnet, daß in der elastisch expandierbaren Schicht des eingesetzten Laminats (5) die Fasermasse auf Basis von Faservliesen, Fasermatten oder Faserfilzen hergestellt ist.

18. Verfahren nach einem der Ansprüche 1 bis 17, dadurch gekennzeichnet, daß die elastisch expandierbare Schicht des eingesetzten Laminats einen Kunstharzanteil von 10 bis 40 Gew.% aufweist.

19. Verfahren nach einem der Ansprüche 1 bis 17, dadurch gekennzeichnet, daß die elastisch expandierbare Schicht des eingesetzten Laminats einen Kunstharzanteil von 10 bis 28 Gew.% aufweist.

## Claims

1. A process for producing electrical insulation of the winding of an electrical machine, which comprises winding portions, especially conductor element bundles, inserted with play in grooves of the rotor or stator, in which grooves (6, 11, 22, 24) are provided whose cross section narrows, at least over an area of the groove depth extension, towards the groove mouth in the radial direction and in that - at least in this area - a thermally expandable laminate (5) is inserted into the gap-shaped interspace formed between the groove surface and the winding portions or conductor element bundles (8, 26), which laminate (5) contains an elastically compressible body of highly elastic fibres as well as a solidified hardenable synthetic resin, which may however be softened by heat and which keeps the fibre body in its compressed state, and in that the laminate (5) is thereafter heated to soften the synthetic resin, whereafter the laminate expands through relaxation of the compressed fibre body and fills the above-mentioned gap-shaped interspace in such a way that, in the above-mentioned area of the narrowing groove cross section, the elastically expanded fibre body supported at the groove surface exerts a force with a not insubstantial component in the direction of the groove bottom (10) as a result of a remaining mechanical compression on at least one inserted winding portion or conductor element bundle (8, 26), and in that the synthetic resin is thereafter hardened at a higher temperature.

2. A process according to claim 1, characterized in that heating of the synthetic resin is effected by impregnation of the laminate with a hot, liquid, duromeric plastics material as impregnating agent, which fills the pores of the expanded laminate (5).

3. A process according to claim 1 or claim 2, characterized in that, before expansion of the fibre body of the inserted laminate, the groove mouth is closed by a temporary or permanent support member.

4. A process according to claim 3, characterized in that a removable wrapping (17) of temperature-dependent contraction strip applied to the rotor surface is used as the support member for temporary closure of the groove mouths of a rotor.

5. A process according to claim 2, characterized in that a removable, divisible, cylindrical template (29) is used as the support member for temporary closure of the groove mouths of a stator.

6. A process according to claim 2, characterized in that breech locks or backplates (23, 21) are provided as permanent support members for closing the groove mouths and are held laterally in fastening grooves, which are provided in the groove side walls.

7. A process according to any one of claims 1 - 6, characterized in that the area (12) in which the groove cross section narrows towards the groove mouth is positioned at or in the vicinity of the groove mouth, in that its depth amounts to less than half the groove depth and in that the upper edge, facing the groove mouth, of the winding portion or conductor element bundle (8) inserted into the groove and lying closest to the groove mouth (11) is located within this area (12).

8. A process according to any one of claims 1 to 7, characterized in that the laminate (5) used has a film (3) of electrically insulating material on at least one side adjacent the elastically expandable layer.

9. A process according to claim 8, characterized in that the laminate (5) is inserted into the gap-shaped interspace with the film side towards the groove wall.

10. A process according to claim 8 or claim 9, characterized in that the laminate used comprises a film of electrically insulating material on each side adjacent the elastically expandable layer.

11. A process according to any one of claims 1 to 8, characterized in that on both sides the laminate used (5) comprises elastically expandable layers adjoining a film of electrically insulating material.

12. A process according to any one of claims 8 to 11, characterized in that at least one of the films in the laminate used consists of polyester.

13. A process according to any one of claims 8 to 11, characterized in that at least one of the films in the laminate used consists of polyimide or contains polyimide in a composite film material.

14. A process according to any one of claims 1 to 13, characterized in that, in the elastically expandable layer of the laminate used, the fibre body consists at least predominantly of glass fibres.

15. A process according to any one of claims 1 to 13, characterized in that, in the elastically expandable layer of the laminate used, the fibre body consists at least predominantly of aramide fibres.

16. A process according to any one of claims 1 to 13, characterized in that, in the elastically expandable layer of the laminate used, the fibre body consists at least predominantly of polyester fibres.

17. A process according to any one of claims 1 to 16, characterized in that, in the elastically expandable layer of the laminate (5) used, the fibre body is manufactured on a basis of fiber fleece, fiber mats or fiber felt.

18. A process according to any one of claims 1 to 17, characterized in that the elastically expandable layer of the laminate used has a synthetic resin content of from 10 to 40 % by weight.

19. A process according to any one of claims 1 to 17, characterized in that the elastically expandable layer of the laminate used has a synthetic resin content of from 10 to 28 % by weight.

## Revendications

1. Procédé de fabrication de l'isolation électrique du bobinage d'une machine électrique présentant des sections de bobinage, en particulier des faisceaux de conducteurs subdivisés, mises en place avec jeu dans des encoches du rotor ou du stator, dans lequel sont prévues des encoches (6, 11, 22 et 24) dont la section transversale, au moins sur une zone de l'extension en profondeur de l'encoche, se rétrécit dans la direction radiale vers l'embouchure ou l'ouverture de l'encoche et dans lequel - au moins dans cette zone - est introduit, dans l'espace intermédiaire s'étendant en forme d'intervalle mince entre la surface de l'encoche et les sections de bobinage ou les faisceaux de conducteurs subdivisés (8, 26), un stratifié (5) susceptible de se dilater sous l'influence de la chaleur et qui contient une masse, et qui est susceptible d'être comprimée élastiquement en fibres à haute élasticité, ainsi qu'une résine synthétique thermodurcissable, à l'état solide mais néanmoins susceptible de se ramollir sous l'influence de la chaleur et qui maintient la masse de fibres dans son état comprimé, et dans lequel le stratifié (5) est ensuite réchauffé afin de ramollir la résine synthétique, de sorte que le stratifié se dilate par détente de la masse de fibres comprimée et remplisse ledit espace intermédiaire en forme d'intervalle mince de telle façon que, dans ladite zone de la section transversale d'encoche qui se rétrécit, la masse de fibres supportée par la surface de l'encoche et dilatée élastiquement, exerce, du fait d'une compression mécanique résiduelle, au moins sur une section de bobinage mise en place ou respectivement sur un faisceau de conducteur subdivisé (8, 26), une force présentant une composante non-négligeable dirigée vers le fond d'encoche (10), et dans lequel la résine synthétique est ensuite durcie à température plus élevée.

2. Procédé selon la revendication 1, caractérisé en ce que le réchauffement de la résine synthétique est réalisé par imprégnation du stratifié avec une matière synthétique chaude, liquide et thermodurcissable servant de milieu d'impregnation et qui remplit les pores du stratifié (5) dilaté.

3. Procédé selon la revendication 1 ou 2, caractérisé en ce qu'avant la dilatation de la masse de fibres du stratifié introduit, on obture l'embouchure de l'encoche par un organe de support temporaire ou permanent.

4. Procédé selon la revendication 3, caractérisé en ce que pour la fermeture temporaire des embouchures d'encoche d'un rotor, on dispose comme organe de support une spire amovible (17) d'une bande susceptible de se rétrécir lorsque la température augmente et qui est rapportée sur la surface du rotor.

5. Procédé selon la revendication 2, caractérisé en ce qu'on utilise, comme organe de support pour l'obturation temporaire des embouchures d'encoche d'un stator, un gabarit cylindrique amovible (29) susceptible d'être divisé en plusieurs parties.

6. Procédé selon la revendication 2, caractérisé en ce que sont prévues comme organes de support permanents pour l'obturation des embouchures d'encoche des cales ou des barrettes de fermeture (23, 21) qui sont maintenues latéralement dans des rainures de fixation ménagées dans les parois latérales des encoches.

7. Procédé selon l'une des revendications 1 à 6, caractérisé en ce que la zone (12) où la section transversale d'encoche se rétrécit vers l'embouchure d'encoche ou bien est disposée à proximité de l'embouchure d'encoche, présente une profondeur inférieure à la moitié de la profondeur de l'encoche et en ce que le bord supérieur, tourné vers l'embouchure d'encoche, de la section de bobinage ou bien du faisceau conducteur subdivisé (8) introduit à l'intérieur de l'encoche et situé le plus à proximité de l'embouchure d'encoche (11), est situé à l'intérieur de cette zone (12).

8. Procédé selon l'une des revendications 1 à 7, caractérisé en ce que le stratifié (5) mis en place, présente, au moins sur une face raccordée à la couche susceptible de se dilater élastiquement, un feuil (3) en matériau électriquement isolant.

9. Procédé selon la revendication 8, caractérisé en ce que le stratifié (5) est inséré dans l'espace intermédiaire en forme d'intervalle mince avec la face du feuil dirigée vers la paroi de l'encoche.

10. Procédé selon la revendication 8 ou 9, caractérisé en ce que le stratifié inséré comporte sur les deux faces se raccordant à la couche susceptible de se dilater élastiquement un feuil en matériau électriquement isolant.

11. Procédé selon l'une des revendications 1 à 8, caractérisé en ce que le stratifié inséré (5) comporte sur les deux faces d'un feuil en matériau électriquement isolant des couches susceptibles de se dilater élastiquement se raccordant à ce feuil.

12. Procédé selon l'une des revendications 8 à 11, caractérisé en ce que, dans le stratifié inséré, au moins l'un des feuils se compose de polyester.

13. Procédé selon l'une des revendications 8 à 11, caractérisé en ce que, dans le stratifié inséré, au moins l'un des feuils se compose de polyimide ou contient du polyimide dans un feuil composé.

14. Procédé selon l'une des revendications 1 à 13, caractérisé en ce que dans la couche susceptible de se dilater élastiquement du stratifié mis en place, la masse de fibres est composée au moins en majorité de fibres de verre.

15. Procédé selon l'une des revendications 1 à 13, caractérisé en ce que dans la couche susceptible de se dilater élastiquement du stratifié mis en place, la masse de fibres est composée au moins en majorité de fibres aramide.

16. Procédé selon l'une des revendications 1 à 13, caractérisé en ce que dans la couche susceptible de se dilater élastiquement du stratifié mis en place, la masse de fibres est composée au moins en majorité de fibres polyester.

17. Procédé selon l'une des revendications 1 à 16, caractérisé en ce que dans la couche susceptible de se dilater élastiquement du stratifié mise en place (5), la masse de fibres est fabriquée à base de non-tissés de fibres, de mattes de fibres ou de feutres de fibres.

18. Procédé selon l'une des revendications 1 à 17, caractérisé en ce que la couche susceptible de se dilater élastiquement du stratifié mis en place, comporte une partie de résine synthétique de 10 à 40% en poids.

19. Procédé selon l'une des revendications 1 à 17, caractérisé en ce que la couche susceptible de se dilater élastiquement du stratifié mis en place comporte une partie de résine synthétique de 10 à 28% en poids.
